(19) Europäisches Patentamt
European Patent Office
Office européen des brevets

(11) **EP 2 413 164 A2**

(12) **EUROPÄISCHE PATENTANMELDUNG**

(43) Veröffentlichungstag:
**01.02.2012 Patentblatt 2012/05**

(51) Int Cl.:
**G01T 1/29** *(2006.01)*

(21) Anmeldenummer: **11003643.1**

(22) Anmeldetag: **04.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **25.06.2010 DE 102010025123**

(71) Anmelder: **Forschungszentrum Jülich Gmbh**
**52425 Jülich (DE)**

(72) Erfinder:
• **Schmidt, Axel**
**69121 Heidelberg (DE)**
• **Bürger, Andreas**
**52531 Übach-Palenberg (DE)**

(54) **Verfahren und Vorrichtung zur Ermittlung eines Elektronenstrahldurchmessers**

(57) Die Erfindung betrifft eine Drahtsensoranordnung zur Messung der Strahlqualität eines Elektronenstrahls, insbesondere zur Ermittlung eines Elektronenstrahldurchmessers. Die Vorrichtung umfasst wenigstens einen elektrisch gegenüber einer Bodenplatte fest angeordneten Draht als Drahtsensor sowie ein Mittel zur Weiterleitung eines Messsignals an eine Auswerteeinheit.

Bei dem erfindungsgemäßen Verfahren zur Messung des Durchmessers eines Elektronenstrahls wird der zu vermessende Elektronenstrahl mit einer konstanten Geschwindigkeit senkrecht über den Messdraht geleitet. Die dadurch in dem Messdraht erzeugten Spannungsabfälle werden über einen definierten Widerstand in die Auswerteeinheit übertragen. Das zeitabhängige Messsignal des Messdrahtes wird mit Hilfe der Geschwindigkeit des Elektronenstrahls in ein ortsabhängiges Messsignal umgewandet und aus den ortsabhängigen Messsignalen des Messdrahtes wird der Strahldurchmesser des Elektronenstrahls bestimmt.

Die Geschwindigkeit des Elektronenstrahls ist dabei entweder bekannt oder kann je nach Ausführungsform des Verfahrens und der verwendeten Vorrichtung über einen Vergleich der zeitgleich aufgenommenen Messsignale wenigstens zweier Drähte, unter Zuhilfenahme des Abstandes dieser beiden Drähte, ermittelt werden.

Figur 2

EP 2 413 164 A2

**Beschreibung**

Die Erfindung betrifft ein Verfahren zur Ermittlung eines Elektronenstrahldurchmessers bei Elektronenstrahlanlagen in einem Leistungsbereich von 10 kW bis 200 kW, sowie eine zur Durchführung dieses Verfahren geeignete Vorrichtung.

Stand der Technik

ITER ist ein experimenteller Fusionsreaktor, der zum ersten Mal ein brennendes Fusionsplasma sowie die technologische Machbarkeit der kontrollierten Fusion zur Energieerzeugung demonstrieren soll. Der Reaktor wird nach dem Tokamak-Prinzip arbeiten und ist der größere Nachfolger des JET (Joint European Torus).

ITER wird als gemeinsames Forschungsprojekt der sieben gleichberechtigten Partner, Europäische Atomgemeinschaft, Japan, Russland, Volksrepublik China, Südkorea, Indien und USA entwickelt, gebaut und betrieben.

Die Forschung im Bereich der Fusionsreaktoren, insbesondere im Bereich der Tokamakforschung, ist hautsächlich durch die Notwendigkeit begründet, für den internationalen Tokamak Aussagen zur Lebenserwartung der Divertor-Targetplatten und zu Tritiumaufbauraten in der Erstkonfiguration zu machen und Verbesserungen vorzuschlagen, einschließlich Werkstoffänderungen, die in einem geeigneten Stadium vorgenommen werden könnten. Die Forschungsarbeiten sind in erster Linie auf die Untersuchung der grundlegenden Plasma-Wand-Wechselwirkungsprozesse im Labor und am Tokamak ausgerichtet.

In dem Bereich der Werkstofferprobung für bestehende (JET) und zukünftige Fusionsreaktoren (ITER, DEMO) werden derzeit zur Simulation extremer Plasmawandwechselwirkungen Belastungen mit Hilfe von leistungsfähigen Elektronenstrahlanlagen durchgeführt. Dieses hat den Vorteil, dass die Ereignisse auf den sogenannten "Erste-Wand" Werkstoffoberflächen kontinuierlich mit einer Infrarotkamera beobachtet werden können. Derzeitige Kandidaten für solche "Erste-Wand" Werkstoffe sind CFC (CFC = Carbon Fiber reinforced Carbon), Wolfram oder Beryllium.

Elektronenstrahlbelastungsversuche werden in Vakuumkammern durchgeführt, wobei dabei in der Regel ein Vakuum in der Größenordnung zwischen $10^{-4}$ und $10^{-5}$ mbar eingestellt wird.

Für die genaue Berechnung des Belastungszustandes wird auf die Kenngröße der so genannten Leistungsdichte ($p_0$) zurückgegriffen [1,2]. Diese Leistungsdichte ($p_0$) definiert sich dabei aus der örtlich eingebrachten Leistung ($P_0$) dividiert durch die Elektronenstrahlquerschnittsfläche ($A_E$).

Bei der Annahme einer kreisförmigen Elektronenstrahlquerschnittsfläche muss der Elektronenstrahldurchmesser ($d_E$) bekannt sein. Wird dieser Elektronenstrahldurchmesser messtechnisch ermittelt, so ergibt sich für die gesuchte örtliche Leistungsdichte der einfache Ansatz:

$$p_0 = P_0 / (0{,}25\ \pi\ d_E^2) \qquad\qquad\qquad (Gl.\ 1)$$

Die im Forschungszentrum Jülich GmbH verwendeten Elektronenstrahlanlagen (z. B. JUDITH 1 und JUDITH 2) haben eine Ausgangsleistung ($P_0$) im Bereich von ca. 10 kW bis 200 kW. Für den Elektronenstrahldurchmesser ergaben sich nach einem aus dem Stand der Technik verwendeten Verfahren Werte von ca. 2 mm bis 17 mm [1]. Sofern diese Werte zu Grunde gelegt werden, liegen die maximalen örtlichen Leistungsdichten ($p_0$) je nach Elektronenabsorptionsfaktor in einer Größenordnung von ca. 1,8 bis ca. 0,6 GW/m$^2$.

Der Elektronenabsorptionsfaktor für Wolfram beträgt $\eta_W = 0{,}46$. Das bedeutet bei einer Eingangsleistungsdichte von $p_0 = 1{,}8$ GW/m$^2$ ergibt sich eine absorbierte Leistungsdichte auf der Wolframoberfläche von $p_1 = p_0$ x 0,46 = 1,8 GW/m$^2$ x 0,46 = 0,83 GW/m$^2$.

Eine Zunahme der Ausgangsleistung ist physikalisch mit der Zunahme des Elektronenstahldurchmessers verbunden (abstoßende Wirkung zwischen den Elektronen). Daher nimmt die örtliche Leistungsdichte bei Zunahme der Ausgangsleistung ab (siehe auch G1.1).

Bereiche, welche mit hohen Leistungsdichten (d. h. kleine Elektronenstrahlleistung mit dann ebenfalls geringerem Elektronenstrahldurchmesser) beaufschlagt werden, lassen sich regelmäßig nur sehr schwer messtechnisch erfassen. So kann es bei längeren Verweilzeiten des Elektronenstrahls auf einem Punkt nachteilig zu örtlich begrenzten Aufschmelzerscheinungen bis hin zu Zerstörungen im Oberflächenbereich oder sogar zum Schmelzen der Messanordnung kommen.

Daneben ist die Nutzung eines Elektronenstrahls als Schweißwerkzeug, wie es bereits in größerem Maßstab verwendet wird, ein qualitativ hochwertiges Werkzeug für die Verbindung verschiedener Metalle. Das Non Vacuum Elektron Beam Welding (NV-EBW) weist gegenüber dem Elektronenschweißen im Vakuum zahlreiche Vorteile auf. Im Hinblick auf die reproduzierbare Qualität, insbesondere im Bereich der Massen-Fertigung, ist die Kontrolle der Strahlparameter sowie deren Einfluss auf das Schweißergebnis von großer Bedeutung. Durch eine genaue Kenntnis der Strahlkenngrößen wie des Strahldurchmessers und der Leistungsdichteverteilung kann eine Aussage über die sich ausbildende Schweißnaht sowie die Schweißbaddynamik getroffen werden. Messungen der Strahlkenngrößen im Prozess erlauben insbesondere die Untersuchung von Humping-Effekten.

Es besteht daher ein grundsätzliches Interesse an einer Methode, den Elektronenstrahldurchmesser schnell und einfach messtechnisch bestimmen zu können, um damit beispielsweise schnell und exakt die Leistungsdichteverteilung beim NV-EBW erfassen zu können.

Aus eigenen Experimenten und der Literatur [1] ist bekannt, dass es zahlreiche Einflussgrößen auf den Elektronenstrahldurchmesser gibt. Die wichtigsten Einflussgrößen sind:

- Beschleunigungsspannung
- Feldstärken der magnetischen Linsensysteme
- Unterdruck im gesamten Kammersystem (ein Unterdruckverlust vergrößert den Elektronenstrahldurchmesser)

Zur Ermittlung der verschiedenen Parameter des Elektronenstrahls ist das Strahlvermessungssystem DIABEAM am Institut für Schweißtechnische Fertigungsverfahren der RWTH-Aachen entwickelt worden [3]. Das DIABEAM-Strahldiagnostiksystem ermöglicht die Signalerfassung des Elektronenstrahls bis zu einer Leistung von 100 kW. Es existieren bereits unterschiedliche Sensorarten, wie z. B. Hole- und Slit-Sensor für die Strahldiagnostik des Elektronenstrahls im Vakuum, die jedoch nicht ohne weiteres für den Prozess an der Atmosphäre angewendet werden können.

Der Elektronenstrahl beim NV-EBW wird auf den Austrittsbereich fokussiert, der einen Durchmesser von 1-2 mm aufweist. Mit steigendem Umgebungsdruck wird der Elektronenstrahl durch Kollision mit Gasmolekülen gestreut und weitet sich auf. In der Atmosphäre behält der Kernstrahl nur auf einer kurzen Strecke seine ursprüngliche Leistungsdichte.

Eine aus dem Stand der Technik bekannte Möglichkeit der Strahldiagnostik beim NV-EBW bietet der Einsatz eines rotierenden Sensors. Bei der Messung mit diesem Sensorprinzip bewegt sich ein rotierender Wolframdraht mit einem Durchmesser von 0,1 mm - 0,5 mm mit Drehzahlen bis hin zu 1000 $s^{-1}$ durch den Strahl. Hierbei ist es nicht erforderlich, den Strahl abzulenken. Ferner kann der Sensor in geringem Abstand zum Strahlaustritt angeordnet werden. Der vom Draht abgeleitete Strom wird in Form eines Spannungssignals gemessen und zu einer Kurzzeitspeicherkarte gesendet. Die rechnerische Auswertung des kompletten Messsignals wird von der DIABEAM Programmsoftware durchgeführt und nach der Messung visuell dargestellt. Das Messprinzip des rotierenden Drahtsensors sowie die sich anschließende Auswertung sind ausführlich in [4] beschrieben.

Mit diesem Prinzip ist in einer einfachen Ausgestaltung, bei der der Drahtsensor auf der gesamten Länge auf einer Kreisbahn durch den Elektronenstrahl geführt wird, eine eindimensionale Strahlvermessung zur Bestimmung des Strahldurchmessers und der maximalen Amplitude (Intensitätsverteilung) möglich. Für eine exakte Vermessung bedarf es jedoch einer zweidimensionalen Erfassung. Dabei muss der Sensor zusätzlich zur Rotation durch den Strahl geführt werden. Dies kann durch eine translatorische oder durch eine weitere rotierende Bewegung um die Strahlachse erfolgen.

Aufgabe und Lösung

Der Erfindung liegt die Aufgabe zugrunde, ein weiteres Verfahren zu schaffen, mit dem auf einfache und effektive Weise charakteristische geometrische Größen eines Elektronenstrahls, insbesondere der Elektronenstrahldurchmesser, ermittelt werden können. Weiterhin ist es die Aufgabe der Erfindung, eine Vorrichtung zur Durchführung eines solchen Verfahrens bereit zu stellen.

Die Aufgaben der Erfindung werden gelöst durch ein Verfahren zur Ermittlung eines Elektronenstrahldurchmessers gemäß Hauptanspruch, sowie durch eine Vorrichtung zur Durchführung eines solchen Verfahrens gemäß Nebenanspruch. Vorteilhafte Ausgestaltungen des Verfahrens sowie der Vorrichtungen ergeben sich aus den jeweils darauf rückbezogenen Ansprüchen.

Gegenstand der Erfindung

Im Rahmen der Erfindung wurde herausgefunden, dass eine einfache Methode zur Bestimmung des Elektronenstrahldurchmessers darauf basiert, dass eine an einem Ort messtechnisch erfassbare Größe, die sich dadurch ändert, dass der zu untersuchende Elektronenstrahl über diesen Ort geleitet wird, als elektrisches Signal ausgewertet wird. Dabei ist es prinzipiell unerheblich, ob ein Messsensor zur Erfassung dieser physikalischen Größe von dem Elektronenstrahl überstrahlt wird, oder ob der Messsensor durch den fixierten Elektronenstrahl geführt wird.

Das erfindungsgemäße Verfahren baut auf dem Messprinzip des aus dem Stand der Technik bekannten rotierenden Drahtsensors für eine Strahlvermessung unter Atmosphäre auf. Im Unterschied zum rotierenden Drahtsensor, der durch einen nicht abgelenkten Elektronenstrahl geführt wird, wird erfindungsgemäß eine statische Vorrichtung (Drahtsensoranordnung) gewählt und dementsprechend für die Vermessung des Elektronenstrahls dieser abgelenkt.

Eine Elektronenstrahlkanone besitzt drei Linsen zur Steuerung des Elektronenstrahls. Unter dem Begriff Linsen werden hier elektrische Spulen verstanden. Zwei Linsen mit den zuvor eingestellten bestimmten elektrischen Linsenströmen bestimmen bzw. steuern hier den Fokus des Elektronenstrahls (ähnlich wie bei einem Lichtmikroskop). Die dritte Linse wird für die Bewegung des Elektronenstrahles in eine bestimmte Richtung benutzt.

In einer ersten einfachen Ausführungsform der Erfindung umfasst die Drahtsensoranordnung wenigstens einen Draht als Messdraht, der ein Mittel zur Weiterleitung eines Messsignals aufweist. Der Messdraht ist fest über zwei Abstandshalter auf einer Bodenplatte angeordnet und elektrisch ihr gegenüber isoliert. Dies kann beispielsweise über zwei Keramikhülsen erfolgen, in denen der Draht eingespannt ist, und die sich in den beiden Abstandshaltern befinden.

In einer weiteren Ausgestaltung der Erfindung weist die Drahtsensoranordnung wenigstens zwei parallel zueinander verlaufende, ebenfalls elektrisch isolierte Drähte auf. Einer dieser Drähte ist der Messdraht. Der zweite Draht erzeugt während der Vermessung des Elektronenstrahls ebenfalls Messsignale, die der Korrektur bzw. der Kalibrierung der eigentlichen Messsignale des Messdrahtes dienen. Bei beiden Drähten ist jeweils ein Mittel zur Weiterleitung eines Messsignals vorgesehen.

Die Anordnung eines zusätzlichen dritten, ebenfalls parallel zu den bestehenden Drähten angeordneten Drahtes ist optional und kann die Messgenauigkeit vorteilhaft noch weiter erhöhen.

Bei einer Anordnung von zwei oder mehreren Drähten liegen diese regelmäßig in einer Ebene. Diese Ebene wird zur Vereinfachung im Folgenden x-z-Ebene genannt, wobei die Ausdehnung der Drähte die z-Richtung vorgibt, und die Drähte somit in einem Abstand X zueinander angeordnet sind.

Vorteilhaft weist die Drahtsensoranordnung sogar drei parallel zueinander angeordnete und elektrisch isolierte Drähte auf, die jeweils ein Mittel zur Weiterleitung eines Messsignals an eine Auswerteeinheit aufweisen.

Die Messdrähte bestehen aus einem metallischen, elektrisch gut leitfähigen Material, welches zudem einen sehr hohen Schmelzpunkt aufweist. Als besonderes geeignet haben sich Wolfram, Tantal oder Molybdän herausgestellt. Wolfram zählt zu den hochschmelzenden Metallen und besitzt von allen reinen Metallen mit T = 3422 °C den höchsten Schmelzpunkt und den zweithöchsten Siedepunkt. Tantal gehört ebenfalls zu den Übergangsmetallen und weist mit ca. 3017°C den zweithöchsten Schmelzpunkt nach Wolfram für reine Metalle auf. Ist im Metall nur eine geringe Menge Kohlenstoff oder Wasserstoff eingelagert, steigt der Schmelzpunkt sogar noch deutlich an. Tantalcarbid besitzt mit einem Schmelzpunkt von 3880 C einen der höchsten Schmelzpunkte aller Substanzen. Molybdän besitzt von allen Elementen der 5. Periode den höchsten Schmelzpunkt mit T = 2623°C.

In einer vorteilhaften weil sehr einfachen Ausgestaltung der Drahtsensoranordnung weist diese zumindest einen Messdraht aus Wolfram aus.

Der Drahtdurchmesser des Messdrahtes ist dabei regelmäßig deutlich kleiner als der zu vermessende Elektronenstrahldurchmesser. Eine Verringerung des Durchmessers des Messdrahtes verbessert die Messempfindlichkeit dahingehend, dass die bei der Vermessung aufgenommenen Messsignale in Form einer GAUSS-Verteilungskurve im Bereich ihrer Spitze ausgeprägter abgebildet werden können. Andererseits kann der Messdraht nicht beliebig in seinem Durchmesser verringert werden, da der Draht dann gegebenenfalls beim Überfahren des Elektronenstrahls durchschmelzen könnte.

Allerdings kann eine technische Optimierung der erfindungsgemäßen Drahtsensoranordnung in Richtung einer Verringerung der Drahtdurchmesser auch über eine gleichzeitige Erhöhung der Elektronenstrahlgeschwindigkeit beim Überfahren derselben erzielt werden.

Der zweite oder ein weiterer Draht, die regelmäßig zur Korrektur bzw. Kalibrierung der eigentlichen Messsignale vorgesehen sind, können denselben Durchmesser wie der Messdraht aufweisen. In der Regel werden sie aber geringfügig dicker ausgewählt, weil diese nicht zur direkten Elektronenstrahl-Durchmesserermittlung herangezogen werden.

In einer vorteilhaften Ausgestaltung der Erfindung weist die Drahtsensoranordnung wenigstens einen Draht mit einem Durchmesser zwischen 0,05 mm und 2 mm auf, insbesondere zwischen 0,1 mm und 1,8 mm auf. Es soll damit sichergestellt werden, dass der zu vermessende Elektronenstrahldurchmesser mit ausreichender Genauigkeit bestimmt werden kann.

Die einzelnen Drähte sind jeweils über zwei Abstandhalter oberhalb einer Bodenplatte angeordnet. In einer vorteilhaften Ausgestaltung der Drahtsensoranordnung sind die Abstandshalter derart ausgelegt, das die Drahtmittelpunkte jeweils den gleichen Abstand y = y1 zur Bodenplatte aufweisen. Die Bodenplatte erstreckt sich in diesem Fall somit parallel zu der von den Drähten aufgespannten x-z Ebene. Die Anordnung der Bodenplatte zu den Drähten hat in erster Näherung jedoch keinen Einfluss auf die Messung. Die Drähte sind dabei elektrisch isoliert, beispielsweise über in die Abstandshalter eingefügte Keramikhülsen. Die Abstandshalter selbst können aus einem hitzebeständigen, und vorteilhaft selbst nicht leitenden Material sein, beispielsweise aus Messing, Kupfer oder Keramik.

Die Bodenplatte bzw. Abdeckplatte dient dazu, während der Messung die Energie des darüber geleiteten Elektronenstrahls aufzunehmen und die unter den Drähten liegenden Bereiche der Vakuumkammer oder eines verfahrbaren Probentisches zu schützen. Solche Art Bodenplatten sind auch unter der Bezeichnung "beam dump" bekannt. Sie bestehen bei geladenen Strahlungen, wie beispielsweise einem hochenergetischen Elektronenstrahl, in der Regel aus Kupfer. Zur Absorption der Strahlungsenergie ist diese Kupferplatte vorteilhaft mit einer Kühlung versehen. In einer speziellen Ausgestaltung der Erfindung wird die Bodenplatte beispielsweise über in diese eingebrachte Kühlbohrungen mit Wasser gekühlt.

Die Drähte weisen jeweils ein Mittel zur Weiterleitung eines Messsignals an eine Auswerteeinheit auf. Die Auswerteeinheit befindet sich regelmäßig außerhalb der Vakuumkammer, in der die eigentliche Vermessung des Elektronenstrahls stattfindet.

In einer sehr einfachen Ausführung der Drahtsensoranordnung ist dieses Mittel zur Weiterleitung jeweils ein einfaches Koaxialkabel, welches mit einem definierten Widerstand verbunden ist, und zur Weiterleitung des elektrischen Messsignals beispielsweise mit einem Mehrkanaloszillographen zur weiteren Auswertung verbunden ist.

Sofern die Messvorrichtung innerhalb einer Vakuumkammer angeordnet ist, ist der Widerstand mit jeweils einem Draht verbunden und wird in einfacher Art und Weise aus der Vakuumkammer herausgeführt. Außerhalb der Vakuumkammer wird beispielsweise das einfache Koaxialkabel mit einem Mehrkanaloszillographen zur weiteren Auswertung verbunden.

Das vorgestellte Verfahren eignet sich besonders gut für die Diagnostik des Elektronenstrahls im Vakuum, ist aber prinzipiell nicht darauf beschränkt. Bei der Diagnostik in Atmosphäre ist zu beachten, dass sich der Elektronenstrahl zunehmend aufweitet. Ferner besteht die Gefahr der Oxidation im Bereich der Messdrähte, was zu einer schlechteren Messempfindlichkeit der Anordnung führen könnte. Denkbar wäre dafür aber ein Messaufbau unter Schutzgas in Form von Gasduschen (z. B. Argon). Das die Drähte dann umspülende Gas würde die Oxidationserscheinungen an den Drähten regelmäßig unterbinden, könnte aber gegebenenfalls auch den Durchmesser beeinflussen.

Das erfindungsgemäße Verfahren zur Ermittlung des Elektronenstrahldurchmessers bedient sich einer eindimensionalen Erfassung einer physikalischen Größe entlang eines linearen

Weges über die Elektronenstrahlsquerschnittsfläche. Als eine physikalische Größe, die durch Überleiten des Elektronenstrahls variiert werden kann, ist beispielsweise eine Gleichspannung in einem metallischen Material zu nennen, die sich, verursacht durch die Elektronenstrahlbewegung über den Messdraht, in ihrer Größe etwas ändert.

Dazu reicht es beispielsweise schon aus, wenn der Elektronenstrahl mit einer Geschwindigkeit $V_E$ über einen Draht als Messsensor geleitet wird und in diesem nahezu zeitgleich eine physikalische Änderung bewirkt, die dann messtechnisch erfasst werden kann.

Als auszuwertendes Messsignal, aus welchem sich beispielsweise der Elektronenstrahldurchmesser ermitteln lässt, wäre zum Beispiel der Spannungsverlauf, bzw. der Spannungsabfall über einen definierten Widerstand zu nennen, der während des Überfahrens des Elektronenstrahls über den Messdraht bewirkt wird.

Ein solches zeitaufgelöstes Signal $I(t)$, welches unter bestimmten Voraussetzungen auch eine Information über den Elektronenstrahldurchmesser enthält, kann über die bekannte Geschwindigkeit einfach in ein längenabhängiges Signal umgerechnet werden. Aus $I(t)$ wird somit $I(x)$. Auf diese Weise lässt sich beispielsweise ein Signal $I(x)$ in Form einer Glockenkurve erhalten, dessen charakteristische Werte wie Peakmaximum, Halbwertsbreite etc. in einfacher Weise zur Charakterisierung des Elektronenstrahldurchmessers herangezogen werden können.

In einer weiteren Ausgestaltung des erfindungsgemäßen Verfahrens wird davon ausgegangen, dass die exakte Geschwindigkeit $V_E$ des abgelenkten Elektronenstrahls nicht bekannt ist. In diesem Fall kann die Auswertung auf eine alternative Weise erfolgen, indem man wenigstens einen weiteren Referenzpunkt, beispielsweise in Form eines zweiten Drahts vorsieht, der unter nahezu identischen Bedingungen ebenfalls ein in Abhängigkeit von der Ablenkung eines Elektronenstrahls variierendes elektrisches Signal erzeugt. Die Signale des Mess- und des Referenzdrahtes werden zeitgleich aufgenommen und in einer Darstellung zusammengeführt. Das Signal des Referenzdrahtes tritt auf Grund des Abstandes zum Messdraht mit einer zeitlichen Versetzung $\Delta t$ zum Signal des Messdrahtes auf.

Durch eine definierte Versuchsanordnung, die eine exakte Abstandsmessung $X$ zwischen dem parallel angeordneten Mess- und dem Referenzdraht ermöglicht, kann dann eine Auswertung des Signals $I(t)$ derart erfolgen, dass zunächst die Messpunkte bestimmt werden, bei denen jeweils das Maximum der Messkurven für den Mess- und den Referenzdraht auftreten.

Die Differenz dieser beiden Messpunkte entspricht aber gerade dem bekannten Abstand $X$ zwischen den beiden Drähten. Somit kann über einen einfachen Dreisatz, jede charakteristische Größe der Messkurve des Messdrahtes, beispielsweise die Halbwertsbreite, ausgedrückt in Anzahl Messpunkte, direkt in eine Länge umgewandelt werden.

In einer weiteren Auswertungsmethode kann eine solche charakteristische Größe auch indirekt bestimmt werden. Dazu wird ebenfalls wie vorab beschrieben eine Messung mit einer definierten Versuchsanordnung, die eine exakte Abstandsmessung $X$ zwischen dem parallel angeordneten Mess- und dem Referenzdraht ermöglicht, an wenigstens zwei Drähten vorgenommen. Die Signale werden wieder zeitgleich aufgenommen und graphisch zusammengeführt. Die Auswertung des Signals $I(t)$ kann derart erfolgen, dass zunächst die Messpunkte bestimmt werden, bei denen jeweils das Maximum der Messkurven für den Mess- und den Referenzdraht auftreten. Die Differenz dieser beiden Messpunkte entspricht aber gerade dem Abstand $X$ zwischen den beiden Drähten.

Über die bekannte Sample-Rate des Oszillographen kann nunmehr aber auch jedem Messpunkt eine Messpunktzeit zugeordnet werden. Aus der Zeitverzögerung $\Delta t$ der beiden Maxima und dem bekannten Abstand $X$ kann dann auf einfache Weise aber sehr genau die Geschwindigkeit des Elektronenstrahls ermittelt werden. Mit der exakten Elektronenstrahlgeschwindigkeit ist dann aber wieder eine Umrechnung des kompletten zeitaufgelösten Signals $I$(t) des Messdrahtes in ein längenabhängiges Signal $I$(x) möglich.

Auf diese Weise kann auch ohne vorherige und exakte Kenntnis der Ablenkgeschwindigkeit des Elektronenstrahls das zeitaufgelöste Signal $I$(t) des Stromflusses über einen einfachen Dreisatz in ein längenabhängiges Signal umgerechnet werden. $I$(t) => $I$(x).

Somit könnten mit dieser Vorrichtung Elektronenstrahldurchmesser bzw. örtliche Leistungsdichten (Gl. 1) leichter abgeschätzt werden. Ein industrieller Einsatz etwa im Bereich von Schweißanlagen und Schmelzanlagen wäre ebenfalls von Interesse.

Eine Voraussetzung für die erfindungsgemäße Verfahrensdurchführung und -auswertung ist jedoch, dass die Relativbewegung zwischen dem Elektronenstrahl und dem Messsensor mit einer gleichmäßigen Geschwindigkeit erfolgt, also im Zeitfenster der Signalaufnahme keine Beschleunigung erfährt. Nur so ist sichergestellt, dass eine Umrechnung einer zeitabhängigen Messgröße in eine längenabhängige Größe korrekt erfolgt.

Bei dem erfindungsgemäßen Verfahren wird eine physikalische Größe entlang eines linearen Weges über die Elektronenstrahlsquerschnittsfläche erfasst. Daraus Rückschlüsse auf einen 2-dimensionalen Durchmesser zu machen, ist nur dann korrekt, wenn die charakteristischen Größen der Elektronenstrahlquerschnittsfläche ($A_E$) rotationssymmetrisch sind.

Mit dem erfindungsgemäßen Verfahren können aber auch gegebenenfalls nicht rotationssymmetrische Kenngrößen ermittelt werden, wenn beispielsweise nacheinander mehrere Versuche mit dem Elektronenstrahl durchgeführt werden, bei dem jeweils der Ablenkungswinkel variiert wird, beispielsweise um 90°. Dabei muss jedoch beachtet werden, dass unabhängig vom absoluten Ablenkungswinkel des Elektronenstrahls, dieser bezüglich der Drahtsensoranordnung immer in direkter x-Richtung erfolgt. Die Drahtsensoranordnung muss also jeweils neu auf den abgelenkten Elektronenstrahl ausgerichtet werden (Geschwindigkeitsvektor ($V_E$) immer senkrecht zur Längsachse des Messdrahtes (Z)).

Alternativ könnten aber auch auf Grund der einfachen Ausführung der erfindungsgemäßen Drahtsensoranordnung gleichzeitig mehrere Drahtsensoranordnungen zum Einsatz kommen, die beispielsweise in einem festen Winkel zum nichtabgelenkten Elektronenstrahl angeordnet sind und nacheinander von dem jeweils in einen anderen Winkel abgelenkten Elektronenstrahl überfahren werden.

Ferner ist es von Vorteil, wenn der Elektronenstrahl während der Messung senkrecht zur Ebene der angeordneten Messdrähte (x-z-Ebene) und senkrecht über diese geleitet wird. Bei Winkeln ungleich 90° ergäbe sich sonst ein zu großer Wert für den ermittelten Elektronenstrahldurchmesser, der jedoch nachträglich bei Kenntnis des exakten Winkels zwischen Strahlrichtung des Elektronenstrahls und Messsensoroberfläche entsprechend mathematisch korrigiert werden könnte.

Zusammenfassend sind mit der hier vorgestellten erfindungsgemäßen Drahtsensoranordnung und dem damit durchzuführenden Verfahren zur Ermittlung des Elektronenstrahldurchmessers folgende Vorteile verknüpft:

1. eine schnelle und insbesondere einfache Bestimmung einer Elektronenstrahlfokussierung, bzw. -defokussierung und

2. eine schnelle und insbesondere einfache Bestimmung eines Elektronenstrahldurchmessers.

Spezieller Beschreibunsgteil

Nachfolgend wird die Erfindung anhand eines Versuchsaufbaus mit nachfolgender Auswertung sowie einiger Figuren und Tabellen näher erläutert, ohne dass dadurch Einschränkungen des Schutzbereiches hergeleitet werden können.

Mit Hilfe der nachfolgend aufgeführten erfindungsgemäßen Drahtsensoranordnung ist es nun mit relativ einfachen Mitteln möglich, den Elektronenstrahldurchmesser zu vermessen und dann weiter nach ausgewählten Kriterien zu definieren (z. B. Full Width at Half Maximum-Methode bei einer GAUSS-Verteilung, FWHM).

Es zeigen:

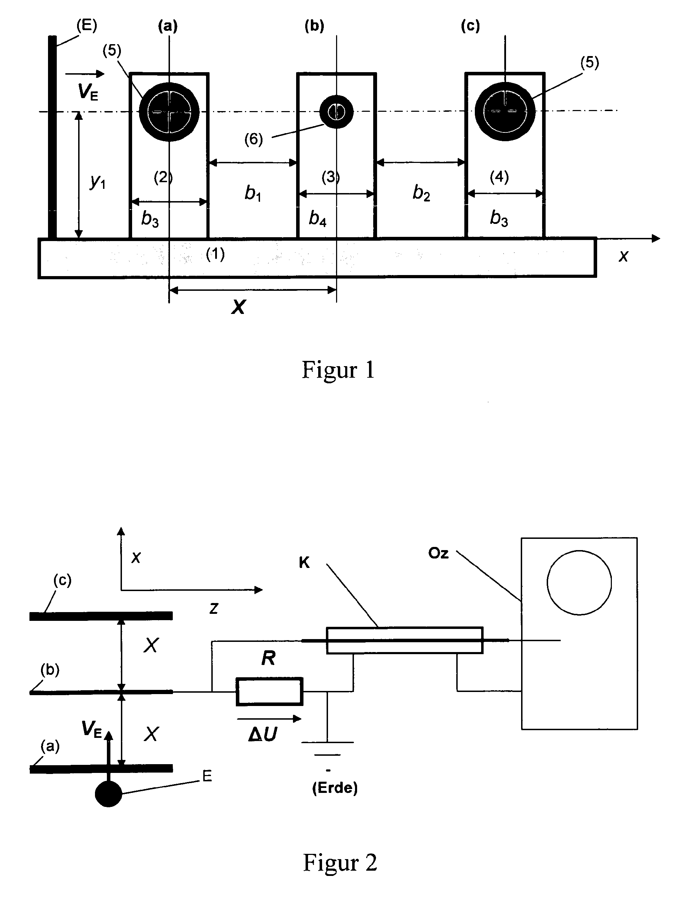

Figur 1: Schematischer messtechnischer Aufbau eines Ausführungsbeispiels einer erfindungsgemäßen Drahtsensoranordnung für die Ermittlung des Elektronenstrahldurchmessers. Es bedeuten:b

    1 = elektrisch gegen Erde isolierte Bodenplatte

    2, 3, 4 = Messing-Haltestäbe für die Drähte

    5, 6 = Keramikbuchsen

    a, b, c = innen liegende Messdrähte aus Wolfram

    $b_1 = b_2$ = Abstand der Haltestäbe

    $b_3 = b_4$ = Breite der Haltestäbe

    $y_1$ = Höhe der Drähte (a, b und c) über der Bodenplatte (1)

E = Elektronenstrahl mit der Geschwindigkeit $V_E$ in x-Richtung

X = Abstand zwischen dem parallel angeordneten Mess- und dem Referenzdraht

Figur 2: Elektrische Anordnung eines Ausführungsbeispiels einer erfindungsgemäßen Drahtsensoranordnung mit: a, b, c = Wolfram-Drähte im Abstand X, alle drei Drähte sind elektrisch auf gleiche Weise über jeweils einen Widersand $R$ = 25 Ω (Leistung ca. 9 W) gegen Erde gelegt. In der Figur ist zur Vereinfachung nur die Verschaltung des Messdrahtes (b) aufgezeigt. Weiterhin ist:

E = Projektion Elektronenstrahl

$V_E$ = Elektronenstrahlgeschwindigkei in x-Richtung

K = Koaxialkabel, Oz = Mehrkanaloszilloskop,

$X$ = Abstand der Drähte

$x$ ,$z$ = Richtungskoordinate (= Bewegungsrichtung des Elektronenstrahles)

$\Delta U$ = Spannungsabfall am Widerstand $R$

Figur 3: Messergebnis zur Bestimmung des Elektronenstrahldurchmessers nach den Anordnungen gemäß der Figuren 1 und 2, hier die Summe aller Messpunkte $MP_i$ in Abhängigkeit des Spannungsabfalls $\Delta U$ am Widerstand $R$.

Weitere Versuchsparameter sind: Beschleunigungsspannung $U_0$= 40 kV, Leistung $P_0$ = 33 kW ($L_1$ = 100 % und $L_2$ = 38 %). Die Größen $L_1$ und $L_1$ sind Spulenstromeinstellungen in [%].

Figur 4: Interessierender Bereich (Draht b) zur Durchmesserbestimmung des Elektronenstrahls aus Fig. 3 nach Umrechnung der Messpunkte $MP_i$ in die Strecke $S$ [cm]. Auftragung Spannungsabfalls $\Delta U$ am Widerstand $R$ in Abhängigkeit von S. Gleiche Versuchsparameter wie in Figur 3.

Figur 5: Vergleich der Elektronendurchmesserbestimmung nach der erfindungsgemäßen Methode und einer aus dem Stand der Technik bekannten Messmethode [1].

In der Figur 1 ist der messtechnische Aufbau einer erfindungsgemäßen Drahtsensoranordnung gezeigt, mit dem der Elektronenstrahldurchmesser recht einfach bestimmt werden kann. Die Anordnung besteht aus drei Wolframdrähten mit zwei unterschiedlichen Durchmessern (Figur 1). Die einzelnen Drahtdurchmesser sowie die Abstände zueinander sind in Tab. 1 zusammengestellt:

Tabelle 1: Die drei Messdrähte (a, b, c) mit den entsprechenden Abständen zueinander:

|  | Drahtdurchmesser | Abstand zu Draht (b), siehe X in Fig. 1, 2 |
|---|---|---|
| Draht: a | 2,4 mm | $X$= 10 cm |
| Draht: b | 1,6 mm | 0 cm |
| Draht: c | 2,4 mm | $X$= 10 cm |

Über das Linsensystem [1] und mit Hilfe der Steuerelektronik der Elektronenstrahlkanone wird der Elektronenstrahl E in einer geraden Linie und im rechten Winkel zu den drei Drähten (a, b, c in Fig. 1 und Fig. 2) über diese geführt. Die Drähte a und c dienen nur zur weiteren Information (definierte Abstandsmessung für Kalibrierzwecke) bzw. Trigger-Basis der Messergebnisse.

Der interessierende Elektronenstrahldurchmesser wird über den Draht (b) bestimmt (Fig. 1 und Fig. 2) sowie dem Abstand des Drahtes (b) zu dem Draht (a), siehe X in Fig. 1 und 2.

Die drei Drähte sind mechanisch in gleicher Höhe (Fig. 2 die Höhe $y_1$) elektrisch isoliert (Keramik) angeordnet. Drei mit den entsprechenden Widerständen (jeweils $R$ = 25 Ω) elektrisch verbundene Koaxialkabel (50 Ω, RG 58) werden aus der Vakuumkammer über eine Entfernung von ca. 15 m zu einem Mehrkanal-Oszillographen geführt (Fig. 2). Der, bzw. die elektrischen Widerstände werden auf das Erdpotential im Bereich der Vakuumkammer gelegt (Fig. 2). Der Spannungsabfall ($\Delta U$) gegenüber dem Erdpotential wird dann mit einem hochempfindlichen Mehrkanal-Oszillographen erfasst.

Der Abstand der Drähte (a) zu (b) und (b) zu (c) ergibt sich aus Abb. 1 wie folgt zu:

$$X = b_1 + 0,5\,(b_3 + b_4) = b_2 + 0,5\,(b_3 + b_4) \qquad \text{(Gl. 2)}$$

Die Apparatur nach Figur 1 ist in einer speziellen Ausführungsform so aufgebaut, dass sich für den Abstand $x_1$ = X zwischen den Drähten (a und b) bzw. für den Abstand $x_2$ = X zwischen den Drähten (b und c) eine Entfernung zueinander von jeweils X = 10 cm ergibt. Natürlich können auch beliebig andere Abstände für X gewählt werden. Sinnvoll ist es jedoch auch aus versuchstechnischer Hinsicht, für die Abstände jeweils einige Zentimeter zu wählen.

Wird der Abstand der Drähte (a) und (b) beispielsweise zu groß gewählt, so wird der Elektronenstrahl mindestens auf einen der beiden Drähte unter einem Winkel $\varphi << 90°$ auftreffen. Durch diesen ungünstigen Winkel vergrößert sich die Fläche des Elektronenstrahles dementsprechend etwas, was wiederum zu Fehlinterpretationen führen könnte. Ebenfalls könnte die Rotationssymmetrie der Elektronenstrahlquerschnittsfläche verloren gehen.

Für die unteren Grenzen ($UG1, 2$) könnte nun folgendes angesetzt werden:

$UG1 \approx 20$ x $d_b$ und $UG2 \approx 3$ x "angenommener Elektronenstrahldurchmesser"
wobei $UG1 > UG2$,
also hier $UG1 = 20$ x 1,6 mm = 32 mm = 3,2 cm

Die zweite Bedingung ist also auch hinreichend erfüllt mit $UG2 = 3$ x 3 mm = 9 mm, da $UG1 = 32$ mm $> UG2$ = 9 mm.

Für die obere Grenze ($OG$) könnte gewählt werden: $OG \approx 70$ x $d_b$ = f($\varphi$), wobei der Winkel $\varphi$ stark von dem Abstand Elektronenstrahlkanone - Messdrahtoberfläche sowie dem gewählten Abstand X der Drähte zueinander abhängt.

In der hier vorgestellten Anordnung ergibt sich damit folgendes:

$OG \approx 70$ x 1,6 mm = 112 mm = 11,2 cm. Es wurde 10 cm gewählt und die Winkelabhängigkeit vernachlässigt.

Zur Erzielung eindeutiger Messergebnisse gilt die Bedingung, dass der Drahtdurchmesser ($d_b$) kleiner als der erwartete Elektronenstrahldurchmesser ($d_E$) sein muss.

Wäre z. B. der Drahtdurchmesser ($d_b$) sehr viel größer als der angenommene Elektronenstrahldurchmesser ($d_E$), so würde man ein Messsignal erhalten, welches regelmäßig nicht mehr die typische GAUSS-Kurve, bzw. Verteilung darstellt. Es ergäbe sich eine Kurve im Anstieg bis zum Maximum ähnlich einer GAUSS-Kurve (typischer S-Verlauf), dann annähernd eine horizontale Linie beginnend bei dem Maximum parallel zur x-Achse, gefolgt von einem Abfall (gespiegelte S-Kurve) gegen die x-Achse. Mit etwas Rechenaufwand kann auch hieraus wieder ein typischer GAUSS-Verlauf rekonstruiert und damit auf den gesuchten Elektronenstrahldurchmesser geschlossen werden.

Zur Vereinfachung wird daher festgelegt, dass der Messdraht (b) so gering wie möglich von seinem Durchmesser her auszuwählen ist (Fig. 1), d. h.:

$$d_b < d_E \qquad\qquad\qquad \text{(Gl. 3)}$$

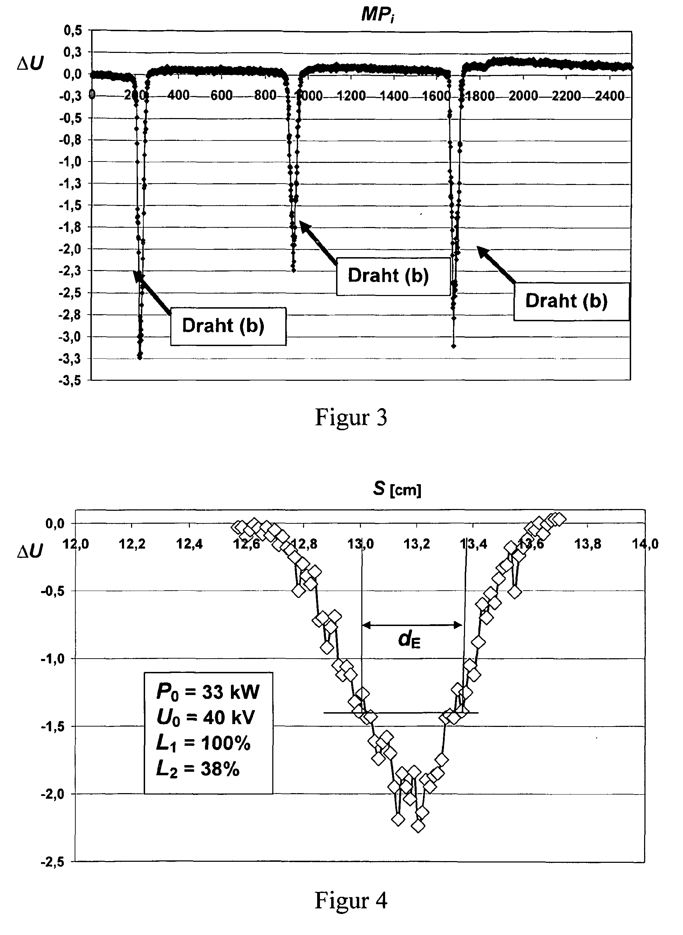

Das auszuwertende Messsignal - aus dem sich dann der zu bestimmende Elektronenstrahldurchmesser ($d_E$) ergibt - entspricht dem Spannungsverlauf, bzw. dem Spannungsabfall $\square$ $U$ an dem Widerstand R (Fig. 2). Diese elektrische Spannung ist eine Gleichspannung, die sich aber verursacht durch die Elektronenstrahlbewegung über den Draht (b) in ihrer Größe etwas ändert (Fig. 3). Über die entsprechenden Messpunkte, bzw. über eine Strecke "gehorcht" diese Spannungsänderung einer GAUSS-Verteilung und kann somit recht einfach zur Bestimmung des Elektronenstrahldurchmessers herangezogen werden (Fig. 4).

Bei einer Beschleunigungsspannung ($U_0$) der Elektronenstrahlkanone im Bereich von 40 kV bis 60 kV ergeben sich regelmäßig Spannungsabfälle ($\Delta U$) in der Größenordnung von ca. - 3,5 V. Eine Messung mit dem Oszillograph liefert dann für $\Delta U$ den Verlauf nach Fig. 3.

Um aus der Figur 3 den gesuchten Elektronenstrahldurchmesser bestimmen zu können, muss aus den Messpunkten ($MP_i$ ) eine Strecke $S$ (z. B. in der Einheit [cm] oder [mm]) errechnet werden. Die Methodik dazu soll in den nachfolgenden Absätzen näher beschrieben werden.

a) Direkte Bestimmung des Elektronenstrahldurchmessers

Aus der Figur 1 kann der Abstand zwischen den beiden Drähten (a) und (b) entnommen werden. Dieser beträgt in dem hier vorgestellten Beispiel $x_1$ = X = 10 cm. In einem ersten Schritt werden die entsprechenden Messpunkte ($MP_i$) in Abhängigkeit der drei Spannungsmaxima messtechnisch bestimmt und es ergibt sich für das hier dargestellte Beispiel der Verlauf, wie in Figur 3 gezeigt. In dieser Figur sind alle Messpunkte in Abhängigkeit des Spannungsabfalls am Widerstand $R$ aufgezeigt. Weitere Parameter bei diesem Versuch waren die Beschleunigungsspannung $U_0$ = 40 kW und die Leistung $P_0$ = 33 kW ($L_1$ = 100 % und $L_2$ = 38%).

Aus Tabelle 2 kann entnommen werden, dass $\Delta MP_i$ = 708 Messpunkte einer Strecke $x_1$ = $X$ von 10 cm entsprechen. Nachfolgend wird hieraus eine einfache Beziehung für die Zuordnung eines allgemeinen Messpunktes

($MP_i$) in ein Längenmaß ($S$) aufgestellt. Aus dem Ansatz:

$$MP_i / \Delta MP_i = S / X$$

folgt:

$$S = X \, (MP_i / \Delta MP_i) \qquad \text{(Gl. 4)}$$

Tabelle 2: Zuordnung zweier Messpunkte des Spannungspeaks nach Figur 3

| Messpunkt | Zahlenwert (aus Fig. 4) | Spannung $U_i$ [V] |
|---|---|---|
| $MP_{i=a}$ | 227 | -3,24 |
| $MP_{i=b}$ | 935 | -2,24 |
| $\Delta MP_i = MP_b - MP_a$ | 708 (entspricht $x_1$ = 10 cm) | |

Nach Gl. 4 entspricht somit einem einzigen beliebigen Messpunkt *(MP_i)* das folgende Längenmaß (S):

$S = MP_i$ (10 cm / 708) = 0,01412 cm

Das bedeutet, dass mit Hilfe der Beziehung nach Gl. 4 jedem Messpunkt ($MP_i$) ein Längenmaß (S) zugeordnet werden kann. In dem hier gewählten Beispiel entspricht somit ein Messpunkt einer Länge von 0,0142 cm. Wird nun noch ausgehend von Figur 3 der entsprechende Peak des Drahtes (b) betrachtet, so ergibt sich die Darstellung nach Figur 4. Aus der Figur 4 kann der gesuchte Elektronenstrahldurchmesser ($d_E$) mit Hilfe eines entsprechenden Kriteriums beispielsweise die Full Width at Half Maximum - Methode, (FWHM [1]) recht einfach aus der Auftragung $\Delta U$ gegen $S$ abgemessen werden.

In dem hier vorgeführten Beispiel beträgt der Elektronenstrahldurchmesser nach Figur 4 dann genau: $d_E$ = (13,38 -13,0) cm = 3,8 mm

Eine Verringerung des Messdraht-Durchmessers (Draht (b)) verbessert die Messempfindlichkeit regelmäßig dahingehend, dass die GAUSS-Verteilung im Bereich ihrer Spitze ausgeprägter abgebildet werden kann, das bedeutet man bekommt ein sauberes Peak-Maximum. Es ist aber zu beachten, dass der Drahtdurchmesser nicht beliebig in seinem Durchmesser verringert werden kann, da der Draht (b) dann gegebenenfalls durchschmelzen würde.

Eine technische Optimierung der vorgestellten Apparatur in Richtung einer Verringerung des Drahtdurchmessers bei gleichzeitiger Erhöhung der Elektronenstrahlgeschwindigkeit ($V_E$, siehe z. B. Figuren 1 und 2) wäre aber als Alternative dann ebenfalls denkbar.

b) Indirekte Bestimmung des Elektronenstrahldurchmessers

Mit einem sehr hochauflösenden Mehrkanal-Osziollographen werden die drei entsprechenden Messsignale entsprechend Figur 3 aufgenommen. Für die Drähte (a, b und c) kann dann der Spannungsabfall an dem entsprechenden Widerstand als Funktion zahlreicher Messpunkte ($MP_i$) wie in Figur 3 dargestellt werden. Das Peakmaximum von Draht (a) liegt bei dem Messpunkt $MP_a$ = 227 und der von Draht (b) erzeugte Peak hat sein Maximum genau über dem Messpunkt $MP_b$ = 935 (siehe auch Tabelle 2).

Die Entfernung dieser beiden Spannungssignale (Spannungsabfall $\Delta U$ am Widerstand $R$, Fig. 2) ist bekannt und kann aus der Fig. 1 entnommen, bzw. nach der Gl. 1 berechnet werden.

Die Strecke beträgt in dem hier gewählten Beispiel bekanntermaßen genau $x_1$ = 10 cm. Nun wird zunächst die Messpunktdifferenz der beiden Spannungspeaks nach Figur 3 bestimmt:

$$\Delta MP_i = MP_b - MP_a \qquad \text{(Gl. 5)}$$

und es ergibt sich (siehe auch Tab. 2)

$$\mathit{\Delta MP}_\mathrm{i} = 935 - 227 = 708$$

Die Sample-Rate (Abtastrate) des Oszilloskops wurde wie folgt gewählt:

$$f_\mathrm{s} = 50 \text{ k Samples / s}$$

wobei der Faktor (SI-Vorsatz) k = $10^3$ ist. Durch Kehrwertbildung ergibt sich die Zeit pro Messpunkt als:

$$t_\mathrm{s} = 1/f_\mathrm{s} \qquad\qquad (\mathrm{Gl.}\ 6)$$

In dem hier gewählten Fall der Sample-Rate ergibt sich für diese Zeit (Messpunktzeit):

$$t_\mathrm{s} = (50 * 10^{-3})^{-1}\ \mathrm{s} = 2{,}0 * 10^{-5}\ \mathrm{s}$$

Die benötigte Zeit ($T$) der Elektronenstrahlbewegung von dem Ort des Drahtes (a) bis hin zu dem Ort des Drahtes (b) errechnet sich recht einfach aus der Messpunktdifferenz (Gl. 5) multipliziert mit der Zeit pro Messpunkt nach Gl. 6.

$$T = t_\mathrm{s}\, \mathit{\Delta MP}_\mathrm{i} = t_\mathrm{s}\, (MP_\mathrm{b} - MP_\mathrm{a}) \qquad\qquad (\mathrm{Gl.}\ 7)$$

Als Zahlenwert ergibt sich für die gesuchte Zeit:

$$T = 2{,}0 * 10^{-5} * 708\ \mathrm{s} = 1{,}416 * 10^{-2}\ \mathrm{s}$$

Nun kann die Elektronenstrahlgeschwindigkeit ($V_\mathrm{E}$) in x-Richtung bestimmt werden nach der Beziehung ($x_1 = X = 10$ cm nach Figur 1)

$$V_\mathrm{E} = X\,/\,\mathrm{T}$$

$$V_\mathrm{E} = 10\ \mathrm{cm}\,/1{,}416 * 10^{-2}\ \mathrm{s} = 706{,}2\ \mathrm{cm/s}$$

und es ergibt sich $V_\mathrm{E}$ zu 25,43 km/h.

Eine Zeitmessung für eine zurückgelegte Strecke von ca. 30 cm über die drei Drähte hinaus ergab beim vorliegenden Versuch eine Zeit von ca. 40 ms. D. h. der Elektronenstrahl bewegt sich demnach mit einer Geschwindigkeit von ca. $V_\mathrm{E}$ =30 cm /(40 * $10^{-3}$) s = 750 cm/s, was in der Größenordnung dem berechneten Wert nach Gl. 8 gut entspricht (706,2 cm / s).

Unter Verwendung der zuvor bestimmten Elektronenstrahlgeschwindigkeit in x Richtung Figur 2) lässt sich mit Gl. 7 und Gl. 8 wieder ein Maß für die Streckendifferenz $\Delta S$ finden (in diesem Fall ist $\Delta S = X$):

$$\Delta S = V_E\, t_s\, \Delta MP_i \qquad\qquad \text{(Gl. 8)}$$

Jeder Messpunkt MP$_i$ lässt sich nun mit Gl. 8 in eine Strecke $S$ in x-Richtung eindeutig umrechnen.

$$S = V_E\, t_s\, MP_i \qquad\qquad \text{(Gl. 9)}$$

In Figur 4 ist das Ergebnis dieser Umrechnung (Gl. 8) aus den gegebenen Messpunkten ($MP_i$) für den Ort des Drahtes (b) in ein Maß für die Strecke S ebenfalls durchgeführt worden. Zur Überprüfung kann der Abstand $\Delta S$ bei den Maxima nach Figur 3 hieraus wieder bestimmt und berechnet werden und es ist:

$$
\begin{aligned}
\Delta S \quad &= S_2 - S_1 \quad = V_E\, t_s\, \Delta MP_i \\
&= 706{,}2 \text{ cm / s} \ast 2{,}0 \ast 10^{-5}\text{ s} \ast 708 \\
&= 9{,}999 \text{ cm}
\end{aligned}
$$

d. h., $\Delta S \approx$ 10 cm und somit in guter Übereinstimmung mit $X$ = 10 cm =$\Delta S$.

Das bedeutet, dass auch nur mit Hilfe der Sample-Rate - wenn auch etwas umständlicher - der Elektronenstrahldurchmesser bestimmt werden könnte. In dem oben aufgeführten Beispiel wurde aber nur der (bekannte) Abstand $X$ zweier Peaks (Figur 3) berechnet.

c) Vergleich mit einer alternativen, aus dem Stand der Technik bekannten Messmethode

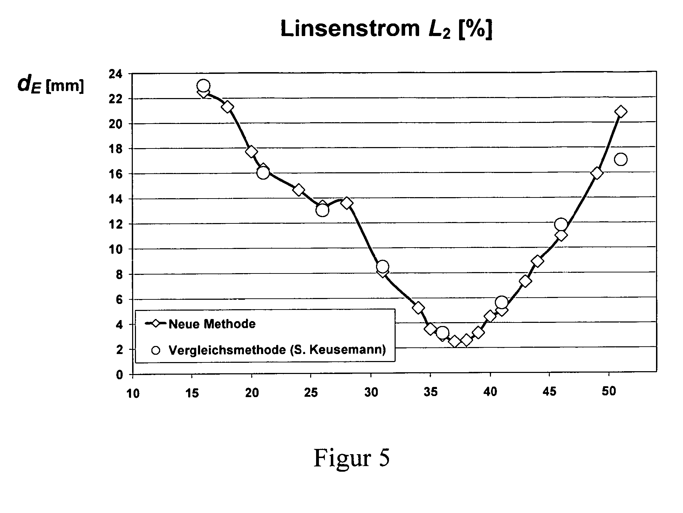

In Figur 5 werden die Ergebnisse der hier vorgestellten neuen Messmethode mit den Ergebnissen der Elektronenstrahldurchmesser-Bestimmung einer anderen und mit wesentlich mehr Aufwand verbundenen Messmethode vorgestellt [1].

In dem gewählten Beispiel werden die ermittelten Elektronenstrahl-Durchmesser in einem kleineren Leistungsbereich von $P_0$ = 10 kW mit einer Beschleunigungsspannung von $U_0$ = 50 kV bei Variation des Linsenstromes 2 (L$_2$) dargestellt. Die Übereinstimmung beider Messmethoden ist bis auf einen Messpunkt in beeindruckender Genauigkeit aus der Figur 5 zu entnehmen.

In der Anmeldung verwendete Formelzeichen:

$b_{1,2}$ =      Abstand zwischen den Haltestäben (Fig. 2)

$b_{3,4}$ =      Breite der Haltestäbe (Fig. 2)

$d_b$ =      Messdrahtdurchmesser in [mm]

$d_E$ =      gesuchter Elektronenstrahldurchmesser

$f_s$ =      Abtastrate des Oszilloskops (sample-rate)

$I(t)$ =      Intensität eines elektrischen Signals in Abhängigkeit der Zeit t

$I(x)$      Intensität eines elektrischen Signals in Abhängigkeit des Ortes x

$L_{1,2}$ =      Linsenströme an der Elektronenstrahlkanone in [%]

$MP_i$ =      Messpunkt mit Index i (i = a, b, c ... bzw. i = 1, 2, 3 .... B.

$\Delta MP_i$ =      Differenz zweier Messpunkte

$P_0$ =      Ausgangsleistung der Elektronenstrahlkanone in [kW]

$P_1 =$      Absorbierte Leistung des Elektronenstrahls an der entsprechenden Oberfläche in [kW]

$p_0 =$      Eingebrachte (werkstoffunabhängige) örtliche Leistungsdichte (= Leistung/Fläche) in [W/m$^2$] oder [MW/m$^2$]

$p_1 =$      Absorbierte örtliche Leistungsdichte (= Leistung/Fläche) in [W/m$^2$] oder [MW/m$^2$]

$R =$      elektrischer Widerstand in [$\Omega$]

$S =$      Strecke, Längenmaß in [cm] oder [mm]

$\Delta S =$      Streckendifferenz in [cm] oder [mm], hier Abstand zweier Peaks

$t =$      Zeit in [s]

$t_s =$      Zeit pro Messpunkt, berechnet aus dem Kehrwert der Abtastrate [$f_s$) in [s]

$V_E =$      Geschwindigkeit des Elektronenstrahls über die Messdrähte in [cm/s] oder anderen üblichen Einheiten

$x =$      Richtungskoordinate

$X =$      Abstand zweier Messdrähte (hier $X = x_1 = x_2 = 10$ cm gewählt, Fig. 1)

$z =$      Richtungskoordinate (parallel zur Messdrahtlängsachse)

$y_1 =$      Höhe der Drähte über der Bodenplatte (Fig. 1)

$U_0 =$      Beschleunigungsspannung der Elektronenstrahlkanone in [kV]

$\Delta U =$      elektrischer Spannungsabfall am Widerstand (Fig. 2) in [V]

$\varphi =$      Einfallswinkel des auf den Messdraht auftreffenden Elektronenstrahls (direkt unter der Elektronenstrahlkanone beträgt dieser Winkel 90°)

$\eta =$      Werkstoffabhängiger Elektronenabsorptionskoeffizient (für Wolfram gilt z. B.: $\eta_w = 0{,}46$)

<u>In der Anmeldung zitierte Literatur:</u>

[1] S. Keusemann; "Feasibility Study for Simulation of Transient Thermal Events on Plasma Facing Materials with Electron Beams", Diploma Thesis RWTH Aachen (December 2008)

[2] A. Schmidt, T. Hirai, S. Keuseman, M. Rödig, G. Pintsuk, J. Linke, H. Maier, V. Riccardo, G. F. Matthews, M. Hili, H. Altmann; "First demonstration of non-destructive tests on tungsten coated JETdivertor CFC tiles in the electron beam facility JUDITH-2", Physika Scripta T138 (2009)

[3] U. Dilthey, M. Ali-Ahmadian Baghbadorani, J. Weiser, "Strahlvermessungssystem zur Qualitätssicherung beim Elektronenschweißen", 1992, 44, 191.

[4] U. Reisgen, M. Schleser, A. Abdurakhmanov, H. Masny, "Messung der Strahlqualität einer Elektronenstrahlanlage in Umgebungsatmosphäre", Materialwissenschaften und Werkstofftechnik 2010, 41, No. 1.

**Patentansprüche**

1. Drahtsensoranordnung zur Messung der Strahlqualität eines Elektronenstrahls, umfassend einen Draht als Drahtsensor sowie ein Mittel zur Weiterleitung eines Messsignals an eine Auswerteeinheit, **dadurch gekennzeichnet, dass** die Drahtsensoranordnung wenigstens einen elektrisch gegenüber einer Bodenplatte fest angeordneten Draht aufweist.

2. Drahtsensoranordnung nach Anspruch 1, mit wenigstens zwei, fest parallel zueinander angeordneten und elektrisch gegenüber einer Bodenplatte isolierten Drähten, die jeweils ein Mittel zur Weiterleitung eines Messsignals an eine Auswerteeinheit aufweisen.

3. Drahtsensoranordnung nach Anspruch 1, mit drei, fest parallel zueinander angeordneten und elektrisch gegenüber einer Bodenplatte isolierten Drähten, die jeweils ein Mittel zur Weiterleitung eines Messsignals an eine Auswerteeinheit aufweisen.

4. Drahtsensoranordnung nach Anspruch 1 bis 3, umfassend einen Draht aus Wolfram, Tantal oder Molybdän.

5. Drahtsensoranordnung nach Anspruch 1 bis 4, umfassend wenigstens einen Draht mit einem Durchmesser zwischen 0,05 mm und 2 mm, insbesondere zwischen 0,1 mm und 0,5 mm.

6. Drahtsensoranordnung nach Anspruch 5, umfassend eine kühlbare Bodenplatte.

7. Drahtsensoranordnung nach Anspruch 1 bis 6, bei der der Draht oder die Drähte jeweils über zwei Keramikhülsen aufweisende Abstandshalter fest mit der Bodenplatte verbunden sind.

8. Drahtsensoranordnung nach Anspruch 1 bis 7, bei der die Drähte bezüglich ihrer Mittelpunkte im gleichen Abstand zur Bodenplatte angeordnet sind.

9. Drahtsensoranordnung nach Anspruch 1 bis 8, die in einer Vakuumkammer angeordnet ist.

10. Verfahren zur Messung des Durchmessers eines Elektronenstrahls mit einer Drahtsensoranordnung, umfassend wenigstens einen elektrisch gegen eine Bodenplatte isolierten Messdraht, der ein Mittel zur Weiterleitung eines Messsignals an eine Auswerteeinheit aufweist, und bei dem die Geschwindigkeit der Ablenkung des Elektronenstrahls bekannt ist, mit den Schritten

   - der zu vermessende Elektronenstrahl wird mit einer konstanten Geschwindigkeit senkrecht über den Messdraht geleitet,
   - die dadurch in dem Messdraht erzeugten Spannungsabfälle werden über einen definierten Widerstand in die Auswerteeinheit übertragen,
   - das zeitabhängige Messsignal des Messdrahtes wird mit Hilfe der bekannten Geschwindigkeit des Elektronenstrahls in ein ortsabhängiges Messsignal umgewandet,
   - aus den ortsabhängigen Messsignalen des Messdrahtes wird der Strahlendurchmesser des Elektronenstrahls bestimmt.

11. Verfahren zur Messung des Durchmessers eines Elektronenstrahls mit einer Drahtsensoranordnung, umfassend wenigstens zwei, in einem Abstand x parallel zueinander angeordnete und elektrisch gegen eine Bodenplatte isolierte Drähte, von denen einer der Messdraht ist, und die jeweils ein Mittel zur Weiterleitung eines Messsignals an eine Auswerteeinheit aufweisen, und bei dem Geschwindigkeit der Ablenkung des Elektronenstrahls nicht bekannt ist, mit den Schritten

   - der zu vermessende Elektronenstrahl wird mit einer konstanten Geschwindigkeit senkrecht über die Drähte geleitet,
   - die dadurch in den Drähten erzeugten Spannungsabfälle werden zeitgleich über definierte Widerstände in die Auswerteeinheit übertragen,
   - das zeitabhängige Messsignal des Messdrahtes wird mit Hilfe der Geschwindigkeit des Elektronenstrahls in ein ortsabhängiges Messsignal umgewandelt, wobei die Geschwindigkeit des Elektronenstrahls über einen Vergleich der zeitgleich aufgenommen Messsignale unter Zuhilfenahme des Abstandes x der beiden Drähte ermittelt wird,
   - aus den ortsabhängigen Messsignalen des Messdrahtes wird der Strahldurchmesser des Elektronenstrahls bestimmt.

12. Verfahren nach Anspruch 11, bei dem eine Drahtsensoranordnung umfassend wenigstens drei, in einem Abstand x1 bzw. x2 parallel zueinander angeordnete und elektrisch gegen eine Bodenplatte isolierte Drähte, eingesetzt wird, wobei der mittlere Draht der Messdraht ist, und wobei die Drähte jeweils ein Mittel zur Weiterleitung eines Messsignals an eine Auswerteeinheit aufweisen, mit den Schritten

- der zu vermessende Elektronenstrahl wird mit einer konstanten Geschwindigkeit senkrecht über die drei Drähte geleitet,

- die dadurch in den Drähten erzeugten Spannungsabfälle werden zeitgleich über definierte Widerstände in die Auswerteeinheit übertragen,

- das zeitabhängige Messsignal des Messdrahtes wird mit Hilfe der Geschwindigkeit des Elektronenstrahls in ein ortsabhängiges Messsignal umgewandelt, wobei die Geschwindigkeit des Elektronenstrahls über einen Vergleich der zeitgleich aufgenommen Messsignale der äußeren Drähte unter Zuhilfenahme des Abstandes x = x1 + x2 dieser beiden Drähte zueinander ermittelt wird,

- aus den ortsabhängigen Messsignalen des Messdrahtes wird der Strahlendurchmesser des Elektronenstrahls bestimmt.

13. Verfahren nach einem der Ansprüche 10 bis 12, bei dem der Strahlendurchmesser des Elektronenstrahls nach dem Kriterium Full Width at Half Maximum aus den ortsabhängigen Messsignalen des Messdrahtes bestimmt wird.

14. Verfahren nach einem der Ansprüche 10 bis 13, bei dem ein Messdraht aus Wolfram, Tantal oder Molybdän eingesetzt wird.

15. Verfahren nach einem der Ansprüche 10 bis 14, bei dem wenigstens ein Draht mit einem Durchmesser zwischen 0,05 mm und 2 mm, insbesondere zwischen 0,1 mm und 0,5 mm, eingesetzt wird.

16. Verfahren nach einem der Ansprüche 10 bis 15, bei dem eine kühlbare Bodenplatte eingesetzt wird.

17. Verfahren nach einem der Ansprüche 10 bis 16, bei dem die Drähte jeweils über wenigstens zwei Keramikhülsen aufweisende Abstandshalter fest mit der Bodenplatte verbunden sind.

18. Verfahren nach einem der Ansprüche 10 bis 17, bei dem die Drähte bezüglich ihrer Mittelpunkte im gleichen Abstand zur Bodenplatte angeordnet sind.

19. Verfahren nach einem der Ansprüche 10 bis 18, bei dem ein Elektronenstrahl mit einer Leistung zwischen 1 und 200 kW, insbesondere zwischen 10 und 130 kW Leistung, eingesetzt wird.

20. Verfahren nach einem der Ansprüche 10 bis 19, bei dem die Messung in einer Vakuumkammer mit einem angelegten Vakuum zwischen $10^{-4}$ bis $10^{-5}$ mbar durchgeführt wird.

Figur 1

Figur 2

Figur 3

Figur 4

## Linsenstrom $L_2$ [%]

**$d_E$ [mm]**

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S. KEUSEMANN.** Feasibility Study for Simulation of Transient Thermal Events on Plasma Facing Materials with Electron Beams. *Diploma Thesis RWTH Aachen,* Dezember 2008
- **A. SCHMIDT ; T. HIRAI ; S. KEUSEMAN ; M. RÖDIG ; G. PINTSUK ; J. LINKE ; H. MAIER ; V. RICCARDO ; G. F. MATTHEWS ; M. HILI.** First demonstration of non-destructive tests on tungsten coated JETdivertor CFC tiles in the electron beam facility JUDITH-2. *Physika Scripta T138,* 2009

- **U. DILTHEY ; M. ALI-AHMADIAN BAGHBADORANI ; J. WEISER.** *Strahlvermessungssystem zur Qualitätssicherung beim Elektronenschweißen,* 1992, vol. 44, 191
- **U. REISGEN ; M. SCHLESER ; A. ABDURAKHMANOV ; H. MASNY.** Messung der Strahlqualität einer Elektronenstrahlanlage in Umgebungsatmosphäre. *Materialwissenschaften und Werkstofftechnik,* 2010, vol. 41 (1